# EUROPEAN PATENT SPECIFICATION

(11) **EP 3 595 452 B1**
(45) Date of publication and mention of the grant of the patent: **12.05.2021**
(21) Application number: 18711414.5
(22) Date of filing: 09.03.2018
(51) Int. Cl.: A21C 13/00, A21D 6/00, A21D 8/08

(54) **METHOD AND INSTALLATION FOR THE INDUSTRIAL MANUFACTURE OF BAKERY PRODUCTS**
VERFAHREN UND ANLAGE ZUR INDUSTRIELLEN HERSTELLUNG VON BACKWAREN
PROCÉDÉ ET INSTALLATION POUR LA FABRICATION INDUSTRIELLE DE PRODUITS DE BOULANGERIE

(30) Priority: 13.03.2017 FR 1752022
(43) Date of publication of application: 22.01.2020
(73) Proprietor: Kaak Groep B.V., 7061 GA Terborg (NL)
(72) Inventor: ZORN, Bernard, 67700 Saverne (FR)
(74) Representative: Peters, Sebastian Martinus
(86) International application number: PCT/IB2018/051548
(87) International publication number: WO 2018/167617

(56) References cited:
- WO-A1-2015/044587

## Description

### BACKGROUND

This invention relates to a method for the industrial manufacture of bakery products, such as long or elongated breads, rolls, baguettes, Parisian breads, round loaves, etc., as well as an installation for the implementation of this method.

The invention relates more particularly, but not exclusively, to the manufacture of products shaped in the form of baguettes, Parisian breads, elongated rolls, long breads, round loaves, etc. It will find a particular interest upstream of the dough rising process for which these products are designed.

Thus, this invention relates to a method and an installation which make it possible to prevent pieces of dough from sticking to the substrates used during rising and baking, without needing to flour either the dough itself or the substrates used for baking.

In the field of baking, there are two categories of production of shaped breads: so-called production by means of "hearth baking" and so-called production "on baking trays or in pans".

In the production of so-called hearth-baked bread, the pieces of dough, derived from a manufacturing method and the division of the dough upstream, are placed, after they are divided or even after they are formed, on the substrates intended to ensure their moving from a unit adapted for rising, also denoted as "proofing". At the end of the latter, these pieces of dough are taken from their rising substrates to be put into a baking unit, in which they come to rest directly on a tray called a "baking sheet".

The production of bread directly on a hot hearth or baking sheet, whether stone or metal, allows an almost instantaneous evacuation of moisture that emerges from below the loaves. The result is a product that, after their baking, are in every respect similar to products obtained through artisanal production.

However, in view of the preceding description, such production called "hearth baking" requires many transfers of the dough, so that it can rise first, then bake, or even once again downstream of this baking, in case of cooling, or even on a freezing substrate in case of deep freezing.

Such transfers are restrictive because they require handling of the products themselves, either in the form of the dough before baking, or in the form of baked or prebaked breads after baking, at different stages of the manufacturing process, which is difficult especially upstream of the oven. In addition, because of the stickiness of the dough, these transfers and the handling generate product degradation. In addition, downstream of the oven where transfers of baked or prebaked products take place, they are handled individually, and are a source of losses and waste.

Also, for the sake of productivity gains, the production of breads on pans or in molds has been developed.

In this case, the pieces of dough are placed on pans or in molds, usually after shaping, and it is these pans or molds that are conveyed through the entire production process which includes rising, scoring, baking, cooling or deep-freezing the products.

Thanks to the principle of maintaining the products in pans or molds, allowing handling of said pans or molds instead of handling the individual products, it is the production lines with pans or molds which guarantee higher production rates, compared to production lines directly on the hearth.

To achieve this efficiency for producing products usually baked on the hearth, the industry has developed baking processes on flat or honeycombed pans, widely perforated and coated with non-stick coatings. These baking processes on perforated baking pans have been greatly developed thanks to the industrial efficiency provided by handling of the pans all through the line.

During baking, perforated pans provide the advantage of allowing an evacuation of the moisture released by the dough in contact with said pan.

However, this method of production on perforated bread pans usually produced on the hearth, presents a disadvantage in that the perforation of the pans produce marks on the lower part of the baked products, which results in the presence of "bumps" on the bottom of the product.

Indeed, when placing the dough on a tray with a several perforations, the raw dough, which may be highly hydrated, has a certain malleability and flows slightly into these perforations, resulting in a finished product with bumps on its lower surface.

However, this distinctive marking has a devaluing effect for the product which is then classified by the consumer as being industrial.

Attempts to replace the perforated pans with solid non-perforated pans to avoid these markings, especially for shaped products such as baguettes, Parisian breads, torpedo loaves, rolls, rye breads, round loaves, etc. which are products known to contain no fat in their recipe and which must be delivered without flouring, result in failures because:
- either the shaped product is placed as it is on the solid pan which is not perforated and not floured, and during baking, a multitude of small hollows result from the evaporation of the moisture coming from the underside of the dough. This moisture cannot escape through the pan;
- or the dough and/or the solid pan on which it is placed is floured abundantly, so that the moisture which is released under this dough can be absorbed thus avoiding the inconvenience of the formation of small hollows. On the other hand, the presence of traces and remnants of flour on the periphery of the baked product, and in particular at on the bottom of the product, constitutes a major drawback, since most shaped products, usually baked on the hearth, should have no residues of flour after baking.

In addition, the flouring that exists between the dough and the pan is an insulator that reduces the heat transmitted by the pan to the product during baking, and this flouring has the effect of reducing the formation of the crust in a product baked on the hearth.

This is the current State of the Art that makes it impossible to bake known shaped products, without flouring and without adding fat, on solid pans and the only production on perforated pans or directly on the hearth is possible, and this will inevitably include the constraints and disadvantages mentioned above. Document WO 2015/044587 A1 discloses a process for the industrial preparation of a bakery product, comprising the step of placing dough on a heated support plate and heating this plate at a temperature of about 100 °C.

### SUMMARY OF THE INVENTION

It is to answer the problems posed in the field of the aforementioned bread production in pans or molds, and as part of an Inventive Concept, one imagines creating an "insulating film" on the bottom surface of a piece of dough, at least before the dough rising stage. Optionally the piece of dough may be shaped prior to the creating of this insulating film.

It is within the context of a second Inventive Concept that we imagined creating this insulating film between the output of the optional shaping and before the placement of the pieces of dough on the solid pan for the purpose of rising or, alternatively, to form said film immediately after the placement of the dough on the pan and before the start of the final rising process.

According to a first aspect, a method for the industrial manufacture of bakery products, such as long or elongated breads, rolls, baguettes, Parisian breads, round loaves, etc..., is provided, wherein the method comprises the steps of:
- placing, optionally after shaping, at least one piece of dough on a support plate;
- subjecting the piece of dough to a rising stage,
wherein the method is characterized in that, before the rising step, a step is taken where the piece of dough is placed on a substrate heated to a temperature of between 80°C and 180°C for the formation of a film on the surface of the piece of dough through contact with said heated substrate.

Accordingly, before the dough is subjected to the rising stage, an additional step is introduced in the method, which additional step comprises:
placing the dough on a heated substrate, wherein said substrate is heated to a temperature of between 80°C and 180°C, and forming a film on a part of the surface of the at least one piece of dough, which part of the surface is facing said heated substrate and/or is in contact with said heated substrate.

The film on the bottom of the dough piece as established by the method of the invention, makes it possible to eliminate, or at least greatly reduce, the need for flouring the piece of dough and/or the support plate prior to placing the piece of dough on said support plate.

In an example of the preferred embodiment, the piece of dough is transported, by means of a conveyor belt, over a heating table which creates said heated substrate, and the piece of dough is placed on said substrate plate after the formation of the film.

In an alternative embodiment, the piece of dough is placed on a substrate plate at a temperature elevated to between 80°C and 180°C which forms said heated substrate for the production of the film.

Most preferably, after placing the piece of dough on the heated substrate, said piece of dough is pressed onto said heated substrate.

According to a second aspect, an installation for the industrial manufacture of bakery products, such as long or elongated breads, rolls, baguettes, Parisian breads, round loaves, etc..., is provided, which installation comprising:
- means for conveying and placing at least one piece of dough on a support plate;
- means for transporting the support plate through at least one rising unit;
wherein said installation further comprises, upstream of the rising unit, a means for placing the at least one piece of dough on a substrate heated to a temperature of between 80°C and 180°C for the formation of a film on the surface of the piece of dough in contact with said heated substrate.

Accordingly, the installation comprises a film forming unit which is arranged upstream of the rising unit. The film forming unit is configured for placing the at least one piece of dough on a heated substrate, wherein said substrate is heated to a temperature of between 80°C and 180°C, and for forming a film on a part of the surface of the at least one piece of dough, which part of the surface is facing said heated substrate and/or is in contact with said heated substrate.

In an embodiment, said means for conveying and placing comprises a conveying and placing device which is configured for conveying and placing at least one piece of dough on a support plate. In an embodiment said means for transporting the support plate comprises a support plate transport device which is configured for transporting the support plate through at least one rising unit.

In a preferred embodiment, said installation comprises a conveyor belt for conveying a piece of dough, under the conveyor belt a heating table extends substantially constituting the heated substrate. Preferably the conveyor belt is configured for placing the piece of dough on the support plate. The installation according to this embodiment comprises a heating table which is arranged under a conveyor belt. The conveyor belt is arranged close to or abutting the heating table. The conveyor belt comprises a carrying surface for supporting the conveyed piece of dough, wherein said carrying surface is arranged at a side of the conveyor belt facing away from the heating table. Accordingly, the heating table and the part of the conveyor belt directly above said heating table, constitutes the heated substrate and is configured for the formation of the film on the surface of the piece of dough which is arranged on the carrying surface of the conveyor belt, during the conveying of the piece of dough by the conveyor belt over the heating table. The bottom surface of the piece of dough is in contact with said conveyor belt on top of said heating table.

In another example, said installation comprises a means for heating the support plate to place the dough on said support plate at a temperature raised to between 80°C and 180°C.

Advantageously, the installation of the invention comprises a means for pressing the dough onto the heated substrate.

Other objects and advantages of this invention will become apparent from the following description relating to examples of embodiments given for informational purposes only and in a non-restrictive fashion.

### BRIEF DESCRIPTION OF THE DRAWINGS

Understanding this description will be facilitated by reference to the accompanying drawings in which:
Figure 1 is a schematic representation, and a longitudinal cross-section, illustrating a particular embodiment of the method and a part of the industrial manufacturing facility for bakery products according to the invention;
Figure 2 is a schematic representation similar to Figure 1, in a view from above;
Figures 3A, 3B, and 3C each represent a cross-section illustrating in detail the pieces of dough respectively before, during, and after forming a film on the bottom surface of said pieces of dough according to one embodiment; and
Figure 4 is a schematic representation, and a longitudinal cross-section, illustrating a particular embodiment of the method and a part of the industrial manufacturing facility for bakery products according to the invention;

### DETAILED DESCRIPTION OF EXAMPLARY EMBODIMENTS OF THE INVENTION

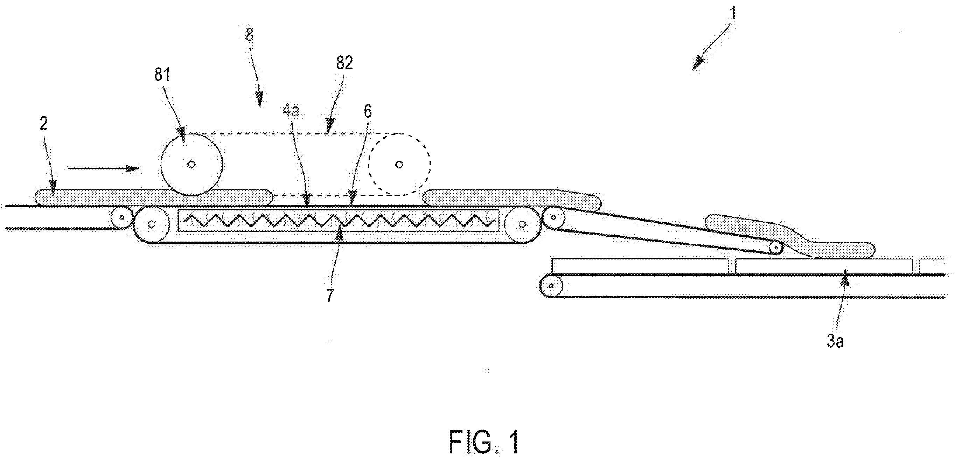

As shown diagrammatically in Figures 1 to 4 of the accompanying drawings, this invention relates to a method and an installation 1 for the industrial manufacture of bakery products, such as baguettes, Parisian breads, long or elongated breads, round loaves, or even torpedo loaves or rye breads.

Preferably, the bakery products produced by the implementation of the method of the invention and by means of the installation 1 of the invention, part of which is shown in the Figures of the attached drawings, are products requiring a shaping step.

In addition, the method and the installation 1 are particularly suitable for the industrial production of this type of products, which are reputed to have no added fat in their recipe and which must be delivered without residues of flouring.

Also, products produced by the implementation of the method of the invention are, more preferably, products whose fat content is less than or equal to 0.5% by weight, relative to the total weight of the product.

The method of the invention, for the industrial manufacture of bakery products as described above, comprises, at least, the following steps:
- placing, optionally after shaping, at least one piece of dough 2 on a support plate 3a, 3b;
- subjecting the at least one piece of dough 2 to a rising stage.

In addition, the method according to the invention comprises an additional step upstream of the step of subjecting the dough 2 to a rising stage. This additional step comprises:
placing the at least one piece of dough 2 on a heated substrate 4a, 4b, wherein said substrate is heated to a temperature of between 80°C and 180°C, and forming a film 5 or skin on a part of the surface of the at least one piece of dough 2, which part of the surface is facing said heated substrate 4a, 4b, and/or is in contact with said heated substrate 4a, 4b.

Most commonly, after the rising step, we proceed to a total or partial baking of the pieces of dough 2. However, it is also possible that risen pieces of dough 2 may be frozen for delayed baking.

For example, the dough 2 may be conveyed, by means of a conveyor belt 6, moving above a heating table 7. This then forms said heated substrate 4a. The at least on piece of dough 2 is subsequently placed on a support plate 3a, shown in Figure 1, after the film 5 or skin is formed.

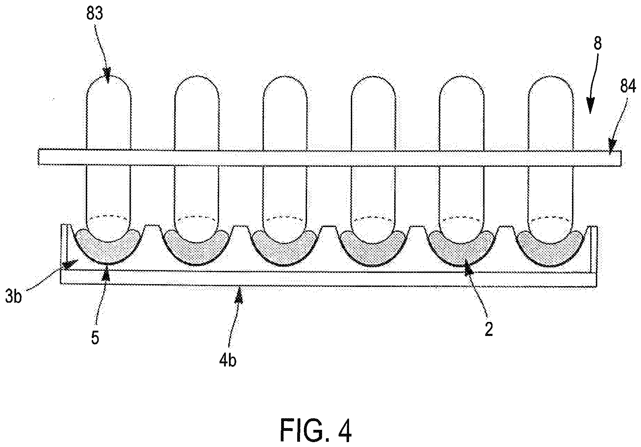

In another example of the method of the invention, with reference to Figure 4, the at least one piece of dough 2 is placed on a support plate 3b which is previously brought to a temperature of between 80 and 180°C. In this example, the support plate 3b comprises a tray, which tray 3b forms, in this case, said heated substrate 4b to produce the film 5 or skin.

Whatever the embodiment chosen for the method of the invention, said at least one piece of dough 2 is preferably be pressed onto said heated substrate 4a, 4b, in order to further improve the formation of the film 5.

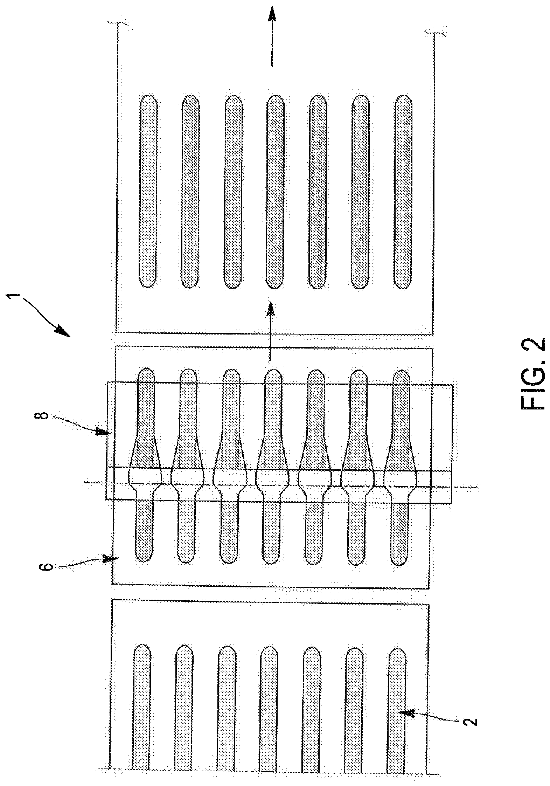

This invention also relates to an installation 1, a part of which is visible in particular in Figures 1 and 2 of the accompanying drawings, said installation 1 being intended for the industrial manufacture of bakery products, such as long or elongated breads, bread rolls, baguettes, Parisian breads, round loaves etc.

This installation 1, particularly advantageous for the implementation of the method of the invention, comprises a means for conveying and placing at least one piece of dough 2 on a support plate 3a, 3b. In routine fashion, such means of conveyance will take the form of one or more conveyor belts.

This installation 1 also comprises a means for transporting the support plate 3a, 3b through, at least, one rising unit. In routine fashion, such means for transporting will take the form of one or more conveyors. However these transport means are not shown in detail in the accompanying Figures. The said rising unit, which is arranged downstream of the position where the at least one piece of dough 2 is placed on a support plate 3a, 3b, is not shown in the accompanying Figures. The installation 1 may also comprise a dough baking unit, this unit being, however, quite optional.

According to the invention, upstream of the rising unit, the installation 1 comprises a means for placing the at least one piece of dough 2 on a heated substrate 4a, 4b at a temperature of between 80°C and 180°C for the formation of a film 5 or skin on the part of the surface of the piece of dough 2 which is in contact with said heated substrate 4a, 4b.

Thus, a piece of dough 2, resulting for example from an installation with an upstream production and dough division, and not shown in the Figures, is conveyed by one or more conveyor belts towards its placement upon the support plate 3a, 3b.

According to a first exemplary embodiment, illustrated in Figures 1 to 3, the conveyor belt 6 extends above a heating table 7 the temperature of which is adjustable between room temperature and about 180°C, preferably between 80°C and 180°C, and even more preferably between 100°C and 150°C. The heating table 7 then substantially forming the heated substrate 4a.

Thus, a piece of dough 2 placed on the conveyor belt 6 is heated, especially at its contact zone with the latter, by said heating table 7 extending below, resulting in the formation of the film 5.

By means of an adjustable feed speed of the conveyor belt 6 and/or a discontinuous operation of the latter and/or the length of the heating table 7 under this belt, the time is determined for a piece of dough 2 to be exposed to the influence of this heating for the formation of the film 5.

The heating table 7 preferably incorporates, but is not limited to, one or more oil radiator(s) as a heating means.

Advantageously, transversely above the conveyor belt 6 and the heating table 7, pressing members 8 extends. The pressing members 8 provide the means of applying pressure on the pieces of dough 2. The pressing members 8 are configured so that the pieces of dough 2 are pressed upon the heated substrate 4a, by moving the dough 2 under the appropriate pressure means.

In particular, these pressing members 8 can take the form of a roller 81 shown in solid lines in Figure 1, or of a pressure band 82, shown in dashed lines in the same

Figure. Preferentially the pressing members 8 are subjected to a driving device for driving the pressing members 8 in a direction identical to the conveyor belt 6 on which said pieces of dough 2 rest, or even at a similar speed so as to simply accompany the pieces of dough 2 during their passage under these pressing members 8. In particular, the driving of the pressing members 8 is configured so that the driving direction of the part of the pressing members 8 facing the conveyor belt 6 is preferably in the same direction of the driving direction of the conveyor belt 6.

The distance or height of placement of this roller 81 or of the pressure band 82 above the conveyor belt 6 is advantageously adjustable in order to be able to adjust the force of the pressure applied through them to a piece of dough 2.

In the case of a pressure band 82, it extends above the dough 2 by coming to wrap around two transverse return rollers, and moves in accompaniment to the pieces of dough 2 during the application of pressure on the conveyor belt 6. Said pressure band 82 is furthermore adjustable, preferably on an angle with respect to this conveyor belt 6, to produce a variable pressure on a piece of dough 2 between the engagement upstream of the latter under this band 82 and its clearance downstream.

It should be noted here that the pieces of dough 2, especially after shaping, have a certain elasticity, often referred to as "dough strength". Accordingly, the pieces of dough 2 will tend to regain their original shape. However, this is done with a certain remanence, and pressure applied only locally and lasting a period of time achieves the desired goal and is specified below.

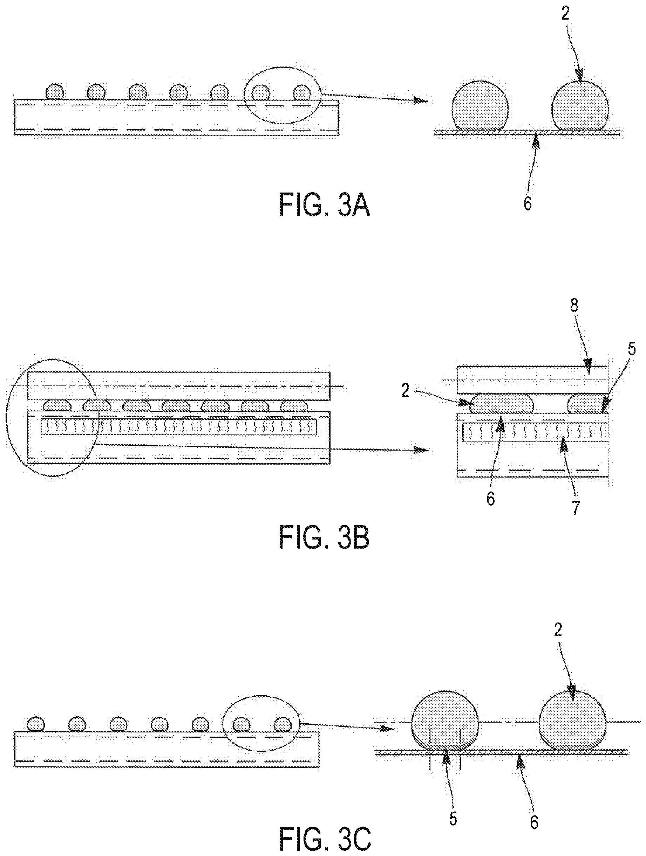

With reference to Figures 3A to 3C, the pieces of dough 2, shaped or not, which arrive above the heating table 7 are pressed between the pressing members 8, for example a roller 81 or a pressure band 82, and the conveyor belt 6. This pressure is intended to ensure placing an extended section of the circumference of the pieces of dough 2 into contact with the heated substrate 4a to form the film. Said heated substrate constituted for example, by the heating table 7 and/or the conveyor belt 6.

The extended section of the pieces of dough 2, brought into contact with the heating table 7, is represented by crosshatching in Figure 3B, where the pieces of dough 2 are pressed by the pressing members 8. In Figure 3C, after passing under the pressing members 8, the elasticity of the dough results in a recovery of the initial shape of the pieces of dough 2. Figure 3A illustrates the narrow section of the pieces of dough 2 placed on the belt 6 before applying pressure to said pieces of dough 2.

Thus, preferably, bringing an extended section of the circumference of the pieces of dough 2 into contact with the heated substrate 4a has the effect of creating a thin film 5or skin under said dough 2. The thin film 5 results from a superficial drying of the base of the piece of dough 2. The width of this film 5, as well as its thickness, are adjustable through the pressure exerted when bringing the pieces of dough 2 into contact with the heated substrate 4a and the duration of this contact. In most cases, this contact of the pieces of dough 2 with the substrate heated to a temperature between 80°C and 100°C, is on the order of 5 to 10 seconds. When the pieces of dough 2 return to their initial shape following the passage under the pressing members 8, the base where the insulating film 5 has formed is partially raised so that this insulating film 5 is advantageously present, in the end, on the lower surface of the pieces of dough 2 and on the lower part of its flanks, as shown in Figure 3C.

Following the formation of the insulating film 5 on the surface of the pieces of dough 2 in contact with the heated substrate 4a here constituted by the heating table 7, said pieces of dough 2 are placed on the support plate 3a, for delivery to the downstream rising unit.

According to an alternative exemplary embodiment, equally interesting, described with reference to Figure 4, said installation 1 comprises a heating means, not shown, for the support plate 3b, which heating means preferably comprise a heater which is configured for heating the support plate 3b up to a temperature preferably to between 80°C and 180°C, more preferably between 100°C and 150°C. Accordingly, the pieces of dough 2 are placed on said support plate 3b at a raised temperature.

In other words, in this embodiment, the pieces of dough 2, after optionally shaping, are conveyed and placed onto a heated support plate 3b. When the pieces of dough 2 are placed on the support plate 3b, the bottom area of the pieces of dough 2 is subjected to a high temperature, for forming the insulating film 5 or skin. The support plate 3b then substantially forms the heated substrate 4b for the formation of the film or skin.

Here, the empty support plate 3b is heated to an adjustable temperature of up to 180°C, before the optionally formed pieces of dough 2 are placed thereon.

Subsequently, the pieces of dough 2 are placed onto the support plate 3b. As schematically shown in figure 4, only a limited portion of the circumference of the pieces of dough 2 is in contact with the preheated support plate 3b, in particular the part of the circumference that is in contact with the support plate 3b.

In this embodiment also, the installation 1 is advantageously completed by a means of applying pressure to the pieces of dough 2 by use of a pressing member 8. Again, the pressure is applied for the purpose of ensuring that an extended section of the circumference of the pieces of dough 2 will come into contact with the heated substrate 4b, in this case the support plate 3b. This results in the formation of an insulating film 5 on an extended section of the circumference. Said extended film 5 ensures that insulating function of said film 5 is at least substantially maintained, even after the pieces of dough 2 have doubled or tripled in volume during its rise.

In the particular case illustrated in Figure 4 attached, where the support plate 3b has a plurality of cells so that each may receive a piece of dough 2, including long or elongated breads, the pressing member 8 may advantageously be presented in the form of rollers 83.

These latter extend substantially perpendicular to the cells of the support plate 3b and are mounted on a common transverse drive axis 84, motorized or not, and configured perpendicularly to the direction of said cells. The number of rollers 83 being preferentially equivalent to the number of cells in the plate 3b. In addition the shape of the rollers 83 is configured appropriate to the shape of the cells.

This second embodiment of the method and of the installation of the invention has a considerable advantage in the case of conventional shaping and dispensing methods in which it is not possible to locate the bottom or the base of the shaped piece of dough before its placement. The placement of the pieces of dough into the cells of the plate is being done transversely with a shaped piece of dough, which is presented parallel to the empty cell of the plate, and wherein the placement is being made by rotating the piece of dough during its fall into the cell.

More generally, the method and the installation 1 according to the invention make it possible to eliminate, or at least to greatly reduce, the need for flouring the dough 2 and/or the support plate 3a, 3b prior to placement.

There are three major advantages to the removal of flouring, especially in the field of industrial production of bakery products:
- improvement in the quality of the crust on the bottom of the finished product because excessive flour on the bottom constitutes a thermal insulator and its elimination, or its reduction, reinforces the heat exchange on the bottom of the loaf;
- significant reduction in the pollution that flouring represents throughout an industrial production circuit, and in particular, through the reduction of flouring and flour dust in suspension in the air, the risk of starting a fire is reduced;
- significant reduction in the fouling of the rising and/or baking supports, thus allowing for less frequency in the obligation to wash and dry said supports.

In addition, the production can be carried out without the inconvenience of solid pans, i.e., that do not have perforations, the latter being responsible for the presence of bumps on the finished product constituting a distinctive devaluing sign.

In addition, the presence of the insulating film on the bottom of the dough avoids the formation of a multitude of hollows at the time of baking the product, the latter usually resulting in an evacuation of the moisture from the dough to said plate by which it is retained during production when using a solid plate without flouring.

In summary, the invention relates to a method for the industrial manufacture of bakery products, wherein said method comprises the steps of:
- placing, optionally after shaping, at least one piece of dough 2 on a support plate 3a, 3b;
- subjecting the dough 2 to a rising stage;

The method is particular in that, upstream of the rising step, a step is taken where the dough 2 is placed on a substrate 4a, 4b heated to a temperature of between 80°C and 180°C for the formation of a film 5 on the surface of the dough 2 through contact with said heated substrate 4a, 4b.

The invention also relates to an installation 1 for the industrial manufacture of such products.

The invention makes it possible to produce bakery products industrially without the need to flour the pieces of dough or the rising supports, while imparting an artisanal appearance to the products.

## Claims

1. Method for the industrial manufacture of bakery products, such as long or elongated breads, rolls, baguettes, Parisian breads, round loaves, etc., wherein said method comprises the steps of:
- placing, optionally after shaping, at least one piece of dough (2) on a support plate (3a, 3b);
- subjecting the dough (2) to a rising stage;
**characterized in that**, before the rising step, a step is taken where the dough (2) is placed on a substrate (4a, 4b) heated to a temperature of between 80°C and 180°C for the formation of a film (5) on the surface of the dough (2) through contact with said heated substrate (4a, 4b).

2. Method for the industrial manufacture of bakery products according to Claim 1, **characterized in that** the dough (2) is transported, by means of a conveyor belt (6), over a heating table (7) forming said heated substrate (4a), and the dough (2) is placed on said substrate plate (3a) after formation of the film (5).

3. Method for the industrial manufacture of bakery products according to Claim 1, **characterized in that** the dough (2) is placed on a substrate plate (3b) at a temperature elevated to between 80°C and 180°C forming said heated substrate (4b) for the production of the film (5).

4. Method for the industrial manufacture of bakery products according to any of Claims 1 to 3, **characterized in that** after placing the dough (2) on the heated substrate (4a, 4b), said dough (2) is pressed on said heated substrate (4a, 4b) .

5. Installation (1) for the industrial manufacture of bakery products, such as long or elongated breads, rolls, baguettes, Parisian breads, round loaves, etc., wherein said installation comprising
- means for conveying and placing at least one piece of dough (2) on a support plate (3a, 3b);
- means for transporting the support plate (3a, 3b) through at least one rising unit;
**characterized in that** the installation further comprises, upstream of the rising unit, an arrangement for placing the dough (2) on a substrate (4a, 4b) heated to a temperature of between 80°C and 180°C for the formation of a film (5) on the surface of the dough (2) in contact with said heated substrate (4a, 4b).

6. Installation (1) for the industrial manufacture of bakery products according to claim 5, **characterized in that** it comprises a conveyor belt (6) for conveying and placing a piece of dough (2) on a support plate (3a), under the conveyor belt (6) a heating table (7) extends substantially constituting the heated substrate (4a) .

7. Installation (1) for the industrial manufacture of bakery products according to claim 5, **characterized in that** it comprises a heating member for heating the support plate (3b) for placing the dough (2) on said support plate (3b) at a temperature raised to between 80°C and 180°C.

8. Installation (1) for the industrial manufacture of bakery products according to any one of claims 5 to 7, **characterized in that** it comprises a pressing member for pressing (8) the dough (2) onto the heated substrate (4a, 4b).

## Patentansprüche

1. Verfahren zur industriellen Herstellung von Backwaren, wie lange oder längliche Brote, Brötchen, Baguettes, Pariser Brote, runde Laibe usw., wobei das Verfahren die folgenden Schritte umfasst:
- Auflegen, gegebenenfalls nach dem Formen, mindestens eines Teigstücks (2) auf eine Trägerplatte (3a, 3b);
- Unterziehen des Teigs (2) einer Gärungsphase;
**dadurch gekennzeichnet, dass** vor dem Gärungsschritt ein Schritt durchgeführt wird, bei dem der Teig (2) auf ein Substrat (4a, 4b) gelegt wird, das auf eine Temperatur zwischen 80°C und 180°C erhitzt wird, um einen Film (5) auf der Oberfläche des Teigs (2) durch Kontakt mit dem erhitzten Substrat (4a, 4b) zu bilden.

2. Verfahren zur industriellen Herstellung von Backwaren nach Anspruch 1, **dadurch gekennzeichnet, daß** der Teig (2) mit Hilfe eines Förderbandes (6) über einen Heiztisch (7), der das erhitzte Substrat (4a) bildet transportiert wird, und der Teig (2) nach Bildung des Films (5) auf die Substratplatte (3a) gelegt wird.

3. Verfahren zur industriellen Herstellung von Backwaren nach Anspruch 1, **dadurch gekennzeichnet, daß** der Teig (2) auf eine Substratplatte (3b) gelegt wird bei einer auf zwischen 80°C und 180°C erhöhten Temperatur, die das erhitzte Substrat (4b) für die Herstellung des Films (5) bildet.

4. Verfahren zur industriellen Herstellung von Backwaren nach einem der Ansprüche 1 bis 3, **dadurch gekennzeichnet, dass** nach dem Auflegen des Teigs (2) auf das erhitzte Substrat (4a, 4b) der Teig (2) auf das erhitzte Substrat (4a, 4b) gedrückt wird.

5. Anlage (1) für die industrielle Herstellung von Backwaren, wie lange oder längliche Brote, Brötchen, Baguettes, Pariser Brote, runde Laibe usw., wobei die Anlage umfasst
- Mittel zum Fördern und Ablegen mindestens eines Teigstücks (2) auf einer Trägerplatte (3a, 3b);
- Mittel zum Transport der Trägerplatte (3a, 3b) durch mindestens eine Gäreinheit;
**dadurch gekennzeichnet, dass** die Anlage ferner stromaufwärts der Gäreinheit eine Anordnung zum Platzieren des Teigs (2) auf ein Substrat (4a, 4b) umfasst, das auf eine Temperatur zwischen 80°C und 180°C erhitzt ist, um einen Film (5) auf der Oberfläche des Teigs (2) in Kontakt mit dem erhitzten Substrat (4a, 4b) zu bilden.

6. Anlage (1) für die industrielle Herstellung von Backwaren nach Anspruch 5, **dadurch gekennzeichnet, dass** sie ein Förderband (6) zum Transportieren und Auflegen eines Teigstücks (2) auf eine Trägerplatte (3a) umfasst, wobei sich unter dem Förderband (6) ein Heiztisch (7) erstreckt, der im Wesentlichen das beheizte Substrat (4a) bildet.

7. Anlage (1) für die industrielle Herstellung von Backwaren nach Anspruch 5, **dadurch gekennzeichnet, dass** sie ein Heizelement zum Erwärmen der Trägerplatte (3b) zum Aufbringen des Teigs (2) auf die Trägerplatte (3b) auf eine Temperatur zwischen 80°C und 180°C umfasst.

8. Anlage (1) zur industriellen Herstellung von Backwaren nach einem der Ansprüche 5 bis 7, **dadurch gekennzeichnet, dass** sie ein Druckelement zum Drücken (8) des Teigs (2) auf das erhitzte Substrat (4a, 4b) umfasst.

## Revendications

1. Procédé pour la fabrication industrielle de produits de boulangerie, tels que des pains longs ou allongés, des petits pains, des baguettes, des pains parisiens, des pains boules, etc., où ledit procédé comprend les étapes consistant à :
- placer, optionnellement après mise en forme, au moins un morceau de pâte (2) sur une plaque support (3a, 3b) ;
- soumettre la pâte (2) à une étape de levée ;
**caractérisé en ce que**, avant l'étape de levée, une étape est réalisée où la pâte (2) est placée sur un substrat (4a, 4b) chauffé à une température comprise entre 80 °C et 180 °C pour la formation d'un film (5) sur la surface de la pâte (2) par contact avec ledit substrat chauffé (4a, 4b).

2. Procédé pour la fabrication industrielle de produits de boulangerie selon la revendication 1, **caractérisé en ce que** la pâte (2) est transportée, au moyen d'un transporteur à courroie (6), au-dessus d'une table chauffante (7) formant ledit substrat chauffé (4a), et la pâte (2) est placée sur ladite plaque substrat (3a) après formation du film (5).

3. Procédé pour la fabrication industrielle de produits de boulangerie selon la revendication 1, **caractérisé en ce que** la pâte (2) est placée sur une plaque substrat (3b) à une température élevée à une température comprise entre 80 °C et 180 °C formant ledit substrat chauffé (4b) pour la production du film (5).

4. Procédé pour la fabrication industrielle de produits de boulangerie selon l'une quelconque des revendications 1 à 3, **caractérisé en ce que**, après avoir placé la pâte (2) sur le substrat chauffé (4a, 4b), ladite pâte (2) est comprimée sur ledit substrat chauffé (4a, 4b).

5. Installation (1) pour la fabrication industrielle de produits de boulangerie, tels que des pains longs ou allongés, des petits pains, des baguettes, des pains parisiens, des pains boules, etc., où ladite installation comprend
- un moyen pour acheminer et placer au moins un morceau de pâte (2) sur une plaque support (3a, 3b) ;
- un moyen pour transporter la plaque support (3a, 3b) à travers au moins une unité de levée ;
**caractérisée en ce que** l'installation comprend en outre, en amont de l'unité de levée, un agencement pour placer la pâte (2) sur un substrat (4a, 4b) chauffé à une température comprise entre 80 °C et 180 °C pour la formation d'un film (5) sur la surface de la pâte (2) en contact avec ledit substrat chauffé (4a, 4b).

6. Installation (1) pour la fabrication industrielle de produits de boulangerie selon la revendication 5, **caractérisée en ce qu'**elle comprend une courroie de transporteur (6) destinée à acheminer et placer un morceau de pâte (2) sur une plaque support (3a), sous la courroie de transporteur (6) une table chauffante (7) s'étend sensiblement constituant le substrat chauffé (4a).

7. Installation (1) pour la fabrication industrielle de produits de boulangerie selon la revendication 5, **caractérisée en ce qu'**elle comprend un élément chauffant destiné à chauffer la plaque support (3b) afin de placer la pâte (2) sur ladite plaque support (3b) à une température élevée à une température comprise entre 80 °C et 180 °C.

8. Installation (1) pour la fabrication industrielle de produits de boulangerie selon l'une quelconque des revendications 5 à 7, **caractérisée en ce qu'**elle comprend un élément de presse destiné à comprimer (8) la pâte (2) sur le substrat chauffé (4a, 4b).
